# EUROPEAN PATENT APPLICATION

(11) **EP 2 905 696 A1**
(43) Date of publication of application: **12.08.2015**
(21) Application number: 14196373.6
(22) Date of filing: 04.12.2014
(51) Int. Cl.: G06F 3/12

(54) **Printer and printing system**

(30) Priority: 16.12.2013 JP 2013259120
(71) Applicant: Funai Electric Co., Ltd., Daito city Osaka 574-0013 (JP)
(72) Inventor: Ueda, Hideo, Daito City Osaka 574-0013 (JP)
(74) Representative: Osha Liang

(57) **Abstract**

A printer (200) having a wireless communication function includes a communication device that wirelessly receives a notification signal broadcast by a mobile terminal (100) and including connection information for wirelessly connecting to the mobile terminal (100), and a controller that switches a connection state of the printer (200) from a first connected state to a second connected state by starting a wireless connection with the mobile terminal (100) according to the connection information included in the notification signal. In the first connected state, the printer (200) is wirelessly connected to a communication terminal (300) different from the mobile terminal (100) or is not wirelessly connected to either the communication terminal or the mobile terminal, and in the second connected state, the printer (200) is wirelessly connected to the mobile terminal (100). The printer (200) also includes a printing device that prints in the second connected state based on print data received from the mobile terminal (100).

## Description

### [Technical Field]

The present invention relates generally to a printer for printing from a mobile terminal using wireless communication, and to a printing system.

### [Background Art]

Techniques for printing by connecting a computer and a printer wirelessly have been proposed. For example, Patent Document 1 discloses a technique for wirelessly connecting a personal computer and a printer. Wirelessly connecting a computer and a printer in this manner may eliminate a need to connect the computer and printer via a wire for printing.

### [Documents of the Related Art]

### [Patent Documents]

[Patent Documents] Japanese Unexamined Patent Application Publication No. 2006-60578

Occasionally, a mobile terminal and a printer have to be connected to another communication terminal wirelessly. In such cases, in order for a wireless printing, it is necessary to appropriately switch the state of a wireless connection of the mobile terminal or printer.

### [Summary of the Invention]

A printer according to one or more embodiments can appropriately switch the state of a wireless connection. Also, there is proposed a printing system provided with a mobile terminal or printer that can appropriately switch the state of a wireless connection.

In one aspect, a printer according to one or more embodiments having a wireless communication function may comprise: a communication device that wirelessly receives a notification signal broadcast by a mobile terminal and including connection information for wirelessly connecting to the mobile terminal; a controller that switches a connection state of the printer from a first connected state to a second connected state by starting a wireless connection with the mobile terminal according to the connection information included in the notification signal, wherein in the first connected state, the printer is wirelessly connected to a communication terminal different from the mobile terminal or is not wirelessly connected to either the communication terminal or the mobile terminal, and in the second connected state, the printer is wirelessly connected to the mobile terminal; and a printing device that prints in the second connected state based on print data received from the mobile terminal, wherein the controller may determine whether the printing has been completed, and switch the connection state of the printer to the first connected state on determining that the printing has been completed.

According to this configuration, for example, when a notification signal is transmitted from the mobile terminal, the printer can return the wireless connected state of the printer to the original connected state (first connected state) when it is determined that the printing has been completed. Therefore, when the wireless connection for printing between the mobile terminal that is a wireless base unit and the printer that is a wireless extension unit is no longer needed, the wireless connection of the printer can automatically return to the original connected state. That is, the wireless connected state of the printer can be appropriately switched. For example, it can switch automatically from the second connected state where the printer is wirelessly connected to the mobile terminal to the first connected state where the printer is connected to the access point. In this case, because the time when the printer is not connected to the access point can be reduced, the time that is impossible to print from another communication device (e.g., a personal computer or the like) connected to the printer via the access point can be reduced. Further, there is no need for a user to manually operate to return to the original connected state after the printing is completed, so it can improve convenience for the user.

For example, in one or more embodiments, when an operation is started to put the printer in a stopped state, the controller may switch the connection state of the printer to the first connected state.

According to this configuration, for example, a wirelessly connected state of the printer can be returned to the first connected state when an operation is started to put the printer in a stopped state. Therefore, when the printer is returned to the operating state thereafter, there is no need for a user to manually switch the wireless connected destination from the mobile terminal to another communication device, so the convenience for the user can be improved.

For example, in one or more embodiments, the connection information may include a service set identifier (SSID), and the controller may determine whether the SSID includes a predetermined character string, and start a wireless connection with the mobile terminal on determining that the SSID includes the predetermined character string.

According to this configuration, for example, a wireless connection with the mobile terminal can be started when it is determined that the SSID includes the predetermined character string. Therefore, software application or mobile terminals that are accessible to the printer can be restricted and unnecessary confusion such as unable to print or the like can be suppressed.

For example, in one or more embodiments, the connection information may include a physical address of the mobile terminal, and the controller may determine whether the physical address includes a predetermined number, and start a wireless connection with the mobile terminal on determining that the physical address includes the predetermined number.

According to this configuration, for example, a wireless connection with the mobile terminal can be started when it is determined that the physical address of the mobile terminal includes the predetermined character string. Therefore, mobile terminals that are accessible to the printer can be restricted and unnecessary confusion such as unable to print or the like can be suppressed.

For example, in one or more embodiments, the controller may determine whether a strength of the notification signal is equal to or greater than a threshold strength, and start a wireless connection with the mobile terminal on determining that the strength of the notification signal is equal to or greater than the threshold strength.

According to this configuration, for example, when it is determined that a strength of a notification signal is equal to or greater than a threshold strength, a wireless connection with a mobile terminal can be started. Therefore, a mobile terminal that is a considerable distance away from the printer can be suppressed from connecting wirelessly to the printer, which also improves security of the printer.

In another aspect, a printing system for wirelessly communicating print data according to one or more embodiments may comprise: a mobile terminal; and a printer having a wireless communication function, wherein the mobile terminal may comprise: a controller that switches a connection state of the mobile terminal from a first connected state to a second connected state by starting a wireless connection with the printer, wherein in the first connected state, the mobile terminal is wirelessly connected to a communication terminal different from the printer or is not wirelessly connected to either the communication terminal or the printer, and in the second connected state, the mobile terminal is wirelessly connected to the printer; and a communication device that transmits print data to the printer in the second connected state, wherein the controller may determine whether transmission of the print data has been completed, and switches the connection state of the mobile terminal to the first connected state on determining that the transmission of the print data has been completed.

According to this configuration, for example, a wireless connected state of the mobile terminal can return to the original connected state (first connected state) when it is determined that the transmission of the print data has been completed. Therefore, when the wireless connection for printing between a mobile terminal and a printer is no longer needed, the wireless connected state of the mobile terminal can automatically return to the original connected state. In other words, the wireless connected state of the mobile terminal can be appropriately switched. For example, it can switch automatically from the second connected state that is wirelessly connected to the printer for printing to the first connected state that is connected to the access point for internet communication. In this case, a time in which the mobile terminal is not connected to the access point can be reduced. Further, there is no need for a user to manually operate to return to the original connected state after the transmission of the print data is completed, and therefore, convenience for the user can be improved.

For example, in one or more embodiments, when an operation is started to put the mobile terminal in a stopped state, the controller may switch the connection state of the mobile terminal to the first connected state.

According to this configuration, for example, a mobile terminal can return a wireless connection of the mobile terminal to the first connected state when an operation is started to put the mobile terminal in a stopped state. Therefore, when the mobile terminal is returned to the operating state thereafter, there is no need for a user to manually switch the wireless connected destination from the printer to another communication device, so the convenience for the user can be improved.

For example, in one or more embodiments, the printer may broadcast a notification signal including connection information for a wireless connection with the printer, the communication device of the mobile terminal may receive the notification signal and transmits a connection request signal to the printer using the connection information, the printer, when the connection request signal is received, may transmit a connection response signal that responds to the connection request signal to the mobile terminal, and when the connection response signal is received, the controller may start a wireless connection with the printer.

According to this configuration, for example, when a notification signal is transmitted from a printer, the wireless connected state of the mobile terminal can return to the original connected state (first connected state) when it is determined that a transmission of print data has been completed. That is, when the printer is a wireless base unit and the mobile terminal is a wireless extension unit, the wireless connected state of the mobile terminal can be appropriately switched.

In another aspect, a method performed in a printer having a wireless communication function may comprise: wirelessly receiving a notification signal that is broadcast by a mobile terminal and includes connection information for wirelessly connecting to the mobile terminal; switching a connection state of the printer from a first connected state to a second connected state by starting a wireless connection with the mobile terminal according to the connection information included in the notification signal, wherein in the first connected state, the printer is wirelessly connected to a communication terminal different from the mobile terminal or is not wirelessly connected to any of the communication terminal or the mobile terminal, and in the second connected state, the printer is wirelessly connected to the mobile terminal; printing in the second connected state based on print data received from the mobile terminal; determining whether the printing has been completed; and switching the connection state of the printer to the first connected state when the determining determines that the printing has been completed. The printer and printing system according to one aspect of the present invention can appropriately switch the state of a wireless connection.

### [Brief Description of Drawing]

FIG. 1 is a diagram illustrating a configuration of a printing system according to one or more embodiments of the present invention.
FIG. 2 is a block diagram illustrating a functional configuration of a printer and a mobile terminal according to one or more embodiments of the present invention.
FIG. 3 is a sequence diagram illustrating a flow of data and message between the mobile terminal and the printer according to one or more embodiments of the present invention.
FIG. 4 is a flowchart illustrating a process operation of the mobile terminal according to one or more embodiments of the present invention.
FIG. 5 is a flowchart illustrating a process operation of the printer according to one or more embodiments of the present invention.
FIG. 6 is a diagram illustrating a configuration of a printing system according to one or more embodiments of the present invention.
FIG. 7 is a block diagram illustrating a functional configuration of a printer and a mobile terminal according to one or more embodiments of the present invention.
FIG. 8 is a sequence diagram illustrating a flow of data and message between the mobile terminal and the printer according to one or more embodiments of the present invention.
FIG. 9 is a flowchart illustrating a process operation of the mobile terminal according to one or more embodiments of the present invention.
FIG. 10 is a flowchart illustrating a process operation of the printer according to one or more embodiments of the present invention.
FIG. 11 is a diagram illustrating a configuration of a printing system according to one or more embodiments of the present invention.
FIG. 12 is a block diagram illustrating a functional configuration of a printer and a mobile terminal according to one or more embodiments of the present invention.
FIG. 13 is a sequence diagram illustrating a flow of data and message between the mobile terminal and the printer according to one or more embodiments of the present invention.
FIG. 14 is a flowchart illustrating a process operation of the mobile terminal according to one or more embodiments of the present invention.

### [Detailed Description of the Embodiments]

Embodiments will be described in detail hereinafter with reference to drawings. Each embodiment described below illustrates one specific example of the present invention. Numerical values, shapes, materials, compositional elements, disposed positions and connection modes of the compositional elements, steps and order of steps are illustrated as an example and these are not intended to limit the present invention. Configuration elements that are not described in an independent claim within the configuration elements in the following embodiments are not necessarily required to achieve the object of the present invention; however, they are described as a part of a configuration of one or more embodiments. Also, the elements of these embodiments can be used in various combinations with each other and are not intended to be limited to the specific combinations disclosed herein.

### (First Example)

In a printing system according to one or more embodiments of the first example, a mobile terminal functions as a wireless base unit and a printer functions as a wireless extension unit. When it is determined that a wirelessly connected state of the printer is to be returned to an original connected state, the wireless connected state of the printer is automatically returned to the original connected state. For example, when it is determined that printing has completed in the printer, the printer resumes automatically the wireless connection with a communication terminal that had been wirelessly connected before being wirelessly connected to the mobile terminal. A printing system according to such embodiment is described in detail hereinafter with reference to drawings.

### [Configuration of Printing System]

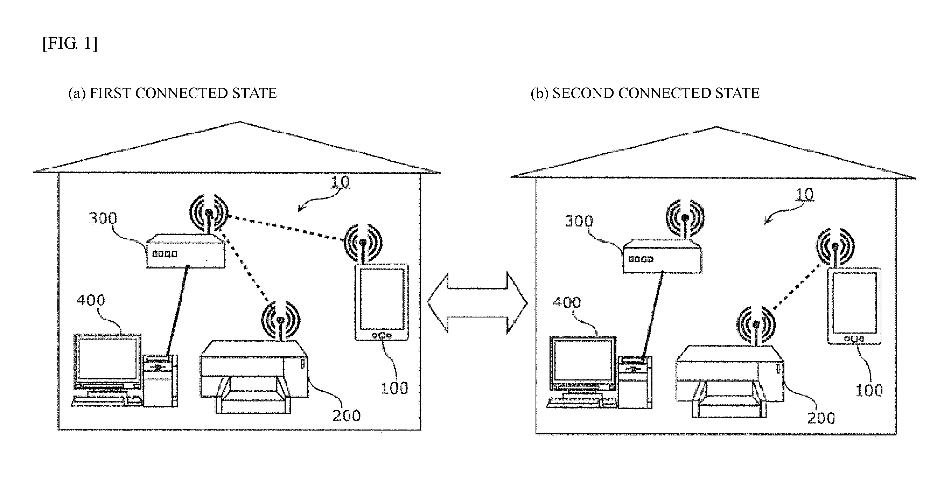

FIG. 1 is a diagram illustrating a configuration of a printing system 10 according to one or more embodiments. In FIG. 1, a wire-line connection is expressed with a solid line, and a wireless connection is expressed with a broken line. The printing system 10 may comprise a mobile terminal 100, a printer 200, an access point 300, and a personal computer 400.

The mobile terminal 100 is equipment with wireless communication that can be portably used. The mobile terminal 100 is also referred to as a portable equipment or mobile communication terminal. The mobile terminal 100 may be connected, for example, to the wireless LAN according to the standard IEEE 802.11 or the like.

Further, the mobile terminal 100 may have a display screen (touch screen) that can perform touch input. In this case, the mobile terminal 100 accepts an input from a user via the touch screen. For example, the mobile terminal 100 may be, for example, a smart phone, a tablet computer, a digital camera, or the like.

The printer 200 prints electronic data on a recording medium such as a paper. For example, the printer 200 may be an ink-jet printer, a laser printer, or the like. The printer 200 may be a multifunction device having an image reading function.

The printer 200 may have a wireless communication function. The printer 200 may be connected, for example, to the wireless LAN according to the standard IEEE 802.11 or the like.

The access point 300 is an example of a communication terminal differing from the printer 200. The access point 300 may function as the wireless base unit in the wireless LAN and mediate interconnections of a plurality of wireless extension units. The access point 300 may function as a router.

The personal computer 400 may be connected to the access point 300 via a wire. The personal computer 400 may carry out communication with devices on the LAN via the access point 300.

In FIG. 1(a), each of the mobile terminal 100 and the printer 200 is wirelessly connected to the access point 300 as a wireless extension unit. As illustrated in FIG. 1(a), a state where the mobile terminal 100 is wirelessly connected to the access point 300 and a state where the printer 200 is wirelessly connected to the access point 300 are referred to here as a first connected state. Those states are respectively referred to as the first connected state. In the first connected state, the personal computer 400 can transmit print data to the printer 200.

The first connected state illustrated in FIG. 1(a) is one example and is not limited to such a state. For example, in the first connected state, the mobile terminal 100 may not be wirelessly connected to any communication terminals. Further, in the first connected state, the printer 200 may not be wirelessly connected to any communication terminals.

In FIG. 1(b), the mobile terminal 100 and the printer 200 are mutually wirelessly connected. Here, the mobile terminal 100 is a wireless base unit and the printer 200 is a wireless extension unit. As illustrated in FIG. 1(b), a state where the mobile terminal 100 and the printer 200 are directly connected is referred to as a second connected state. In the second connected state, the personal computer 400 cannot transmit print data to the printer 200.

The second connected state illustrated in FIG. 1(b) is one example and is not limited to such state. For example, in the second connected state, the mobile terminal 100 may be connected to a public telephone network in addition to being wirelessly connected to the printer 200.

### [Functional Configuration of Mobile Terminal and Printer]

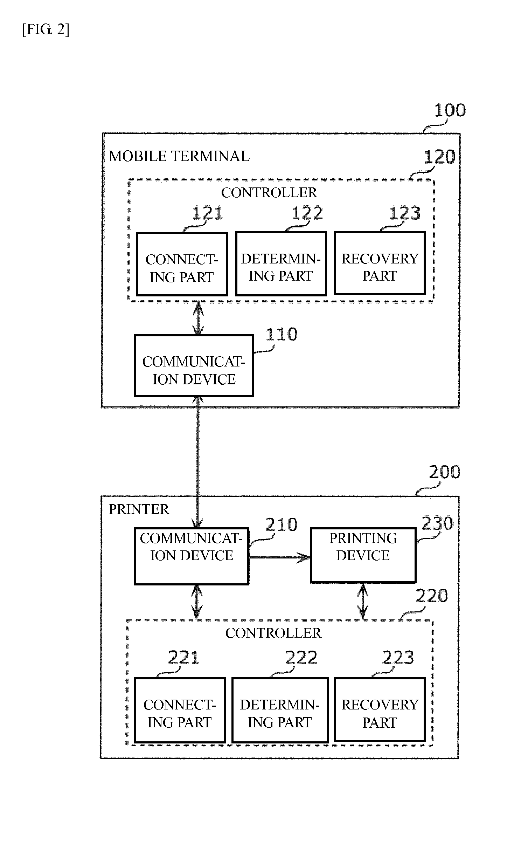

Next, a functional configuration of the mobile terminal 100 and the printer 200 according to one or more embodiments will be described. FIG. 2 is a block diagram illustrating a functional configuration of the mobile terminal 100 and the printer 200.

First, functional configuration of the mobile terminal 100 will be described. As illustrated in FIG. 2, the mobile terminal 100 may comprise a communication device 110 and a controller 120.

The communication device 110 may receive and transmit a wireless signal. For example, the communication device 110 may broadcast a notification signal including connection information to be wirelessly connected to an individual device (mobile terminal 100) that is the wireless base unit. Further, the communication device 110 may transmit print data to the printer 200.

The controller 120 may control various operations of the mobile terminal 100. The controller 120 may comprise a connecting part 121, a determining part 122, and a recovery part 123.

The connecting part 121, in the first connected state which is wirelessly connected to the access point 300, may switch from the first connected state to the second connected state that is a state connected wirelessly to the printer 200 by initiating a wireless connection with the printer 200. In one or more embodiments of the present example, the connecting part 121 may connect wirelessly with the printer 200 in the infrastructure mode.

The determining part 122 may determine whether the second connected state is to be returned to the original connected state (the first connected state). For example, the determining part 122 may determines whether to return to the original connected state by determining whether a transmission of print data has completed. For example, the determining part 122 may determine to return to the original connected state when it is determined that the transmission of the print data has completed.

The recovery part 123 may return the wireless connected state of the mobile terminal 100 to the first connected state when it is determined to return to the original connected state. In other words, the recovery part 123 may automatically return the wireless connected state of the mobile terminal 100 to the original connected state. Here, when it is determined to return to the original connected state, the recovery part 123 may disconnect the wireless connection with the printer 200, transmit a reconnection request to the access point 300, and automatically resume the wireless connection with the access point 300.

For example, when it is determined that the transmission of the print data has completed, the recovery part 123 may return the wireless connected state of the mobile terminal 100 to the first connected state.

Further, for example, when an operation is started to put the mobile terminal 100 in a stopped state, the recovery part 123 may return the wireless connected state of the mobile terminal 100 to the first connected state. The stopped state includes, for example, shutdown, standby, sleep, or the like.

A functional configuration of the printer 200 will be described below. As illustrated in FIG. 2, the printer 200 may comprise a communication device 210, a controller 220, and a printing device 230.

The communication device 210 may receive and transmit a wireless signal. For example, the communication device 210 may receive a notification signal that is a wireless signal broadcast from the mobile terminal 100 and is a wireless signal that includes connection information for wirelessly connecting to the mobile terminal 100. Further, for example, the communication device 210 may receive print data from the mobile terminal 100.

The controller 220 may control various operations of the printer 200. The controller 220 may comprise a connecting part 221, a determining part 222, and a recovery part 223.

The connecting part 221, in the first connected state that is wirelessly connected to the access point 300, may switch the first connected state to the second connected state by initiating a wireless connection with the mobile terminal 100 using connection information included in the notification signal.

The determining part 222 may determine whether the second connected state is to be returned to an original connected state (the first connected state). For example, the determining part 222 may determine whether the connection is to be returned to the original connected state by determining whether printing has completed. For example, the determining part 222 may determine to return to the original connected state when it is determined that the printing has completed.

The recovery part 223 may return the wireless connected state of the printer 200 to the first connected state when it is determined to return to the original connected state. In other words, the recovery part 223 may automatically return the wireless connected state of the printer 200 to the original connected state. In one or more embodiments of the present example, when it is determined to return to the original connected state, the recovery part 223 may disconnect the wireless connection with the mobile terminal 100, transmit a reconnection request to the access point 300, and automatically resume the wireless connection with the access point 300.

For example, when it is determined that the printing has completed, the recovery part 223 may return the wireless connected state of the printer 200 to the first connected state. Further, for example, when the operation to put the printer 200 in a stopped state is initiated, the recovery part 223 may return the wireless connected state of the printer 200 to the first connected state.

The printing device 230 may carry out printing in the second connected state based on print data received from the mobile terminal 100. In other words, the printing device 230 may print a document, an image, or the like on a medium such as a paper using the print data such as text data or image data.

### [Operation of Printing System]

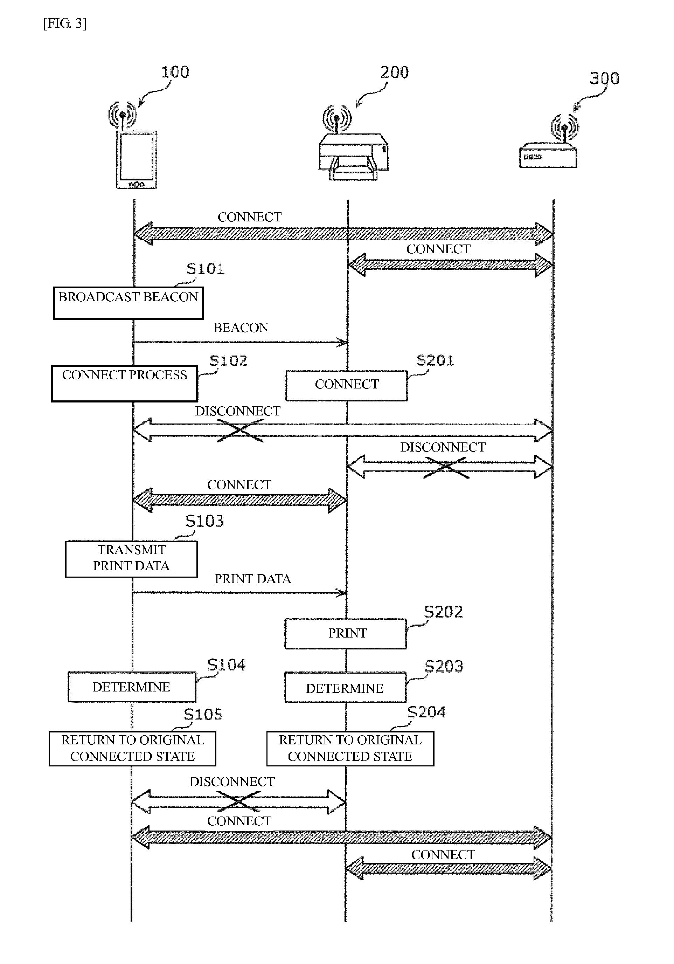

An operation of the printing system 10 configured as described above will be described below. FIG. 3 is a sequence diagram illustrating a flow of data and message between the mobile terminal 100 and the printer 200. A description will be given here with the first connected state as an initial state where the mobile terminal 100 and the printer 200 are wirelessly connected to the access point 300.

First, a user starts a software application in the mobile terminal 100 to print using the printer 200. The user then selects a print object via the user interface of the software application and instructs printing of the print object.

At that time, the communication device 110 of the mobile terminal 100 may broadcast (S101) a beacon. The beacon is one example of the notification signal including connection information to be wirelessly connected to the mobile terminal. In other words, the communication device 110 may switch from the wireless extension unit mode to the wireless base unit mode to transmit the beacon.

The communication device 210 of the printer 200 may receive the beacon. The connecting part 221 may then execute a connection process (S201). For example, the connecting part 221 may start a wireless connection with the mobile terminal 100 using connection information included in the beacon. The connecting part 121 of the mobile terminal 100 may also execute the connection process (S102). The connection process may include an authentication, association, or the like. The wireless connection between the mobile terminal 100 and the printer 200 may be established by the connection process.

That is, the connections between the access point 300 and the mobile terminal 100 as well as the printer 200 may be disconnected and the mobile terminal 100 and the printer 200 may be connected. In other words, the first connected state may be switched to the second connected state. Here, the mobile terminal 100 is the wireless base unit and the printer 200 is the wireless extension unit.

The communication device 110 of the mobile terminal 100 may then transmit the print data to the printer 200 (S103). For example, the communication device 110 may transmit, for example, image data selected by the user in the software application as the print data.

The printing device 230 of the printer 200 may print based on the received print data (S202). Subsequently, the determining part 222 may determine whether to return to the original connected state (the first connected state) (S203). Here, when it is determined to return to the original connected state, the recovery part 223 may return the wireless connected state of the printer 200 to the original connected state (S204). In one or more embodiments of the present example, the recovery part 223 may disconnect the wireless connection with the mobile terminal 100 and at the same time, resume the wireless connection with the access point 300.

Meanwhile, the determining part 122 of the mobile terminal 100 may also determine whether the connected state is returned to the original connected state (S104) in the same manner as the determining part 222 of the printer 200. Here, when it is determined to be returned to the original connected state, the recovery part 123 may return the wireless connected state of the mobile terminal 100 to the original connected state (the first connected state) (S105). That is, the recovery part 123 may disconnect the wireless connection with the printer 200 and resume the wireless connection with the access point 300.

### [Operation of Mobile Terminal]

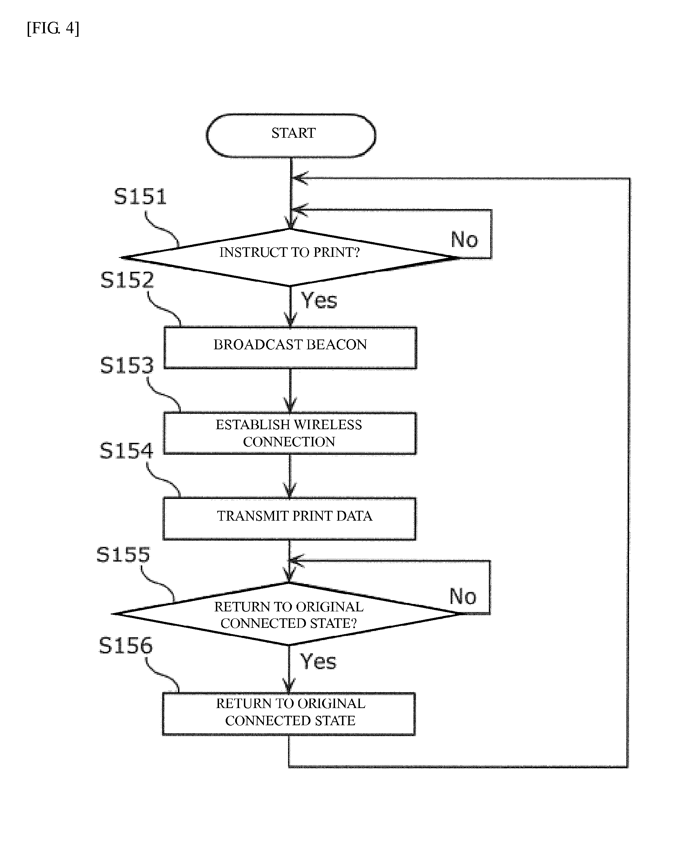

An operation of the mobile terminal 100 will be described in detail next. FIG. 4 is a flowchart illustrating a process operation of the mobile terminal 100 according to one or more embodiments.

First, the controller 120 may determine whether a print instruction is received from a user (S151). When the print instruction has not been received here (No in S151), the process may return to the process in step S151. On the other hand, when the print instruction has been received (Yes in S151), the communication device 110 may transmit a beacon (S152).

The beacon may include connection information including a service set identifier (SSID). The SSID may include, for example, a predetermined character string to identify the software application.

The connecting part 121 may establish a wireless connection with the printer 200 (S153). The wireless connected state of the mobile terminal 100 may switch here from the first connected state to the second connected state. The connecting part 121 may save information in memory (not illustrated) for returning to the first connected state. For example, the connecting part 121 may store the connection information of the access point 300 in memory.

The communication device 110, in the second connected state, may transmit print data to the printer 200 (S154).

The determining part 122 may determine whether to return to the original connected state (the first connected state) (S155). For example, the determining part 122 may determine to return to the original connected state when the transmission of the print data has completed. Further, when the wireless connection with the printer 200 is disconnected, the determining part 122, for example, may determine to return to the original connected state. Further, for example, when an operation is started to put the mobile terminal 100 in a stopped state, the determining part 122 may determine to return to the original connected state.

Here, when it is determined to return to the original connected state (Yes in S155), the recovery part 123 may disconnect the wireless connection with the printer 200 and return to the original connected state by resuming the wireless connection with the access point 300 (S156). The recovery part 123, for example, may return to the original connected state using connection information of the access point 300 saved in the memory. In the meantime, when it is determined not to return to the original connected state (No in S155), the process of step S155 may be repeated.

### [Operation of Printer]

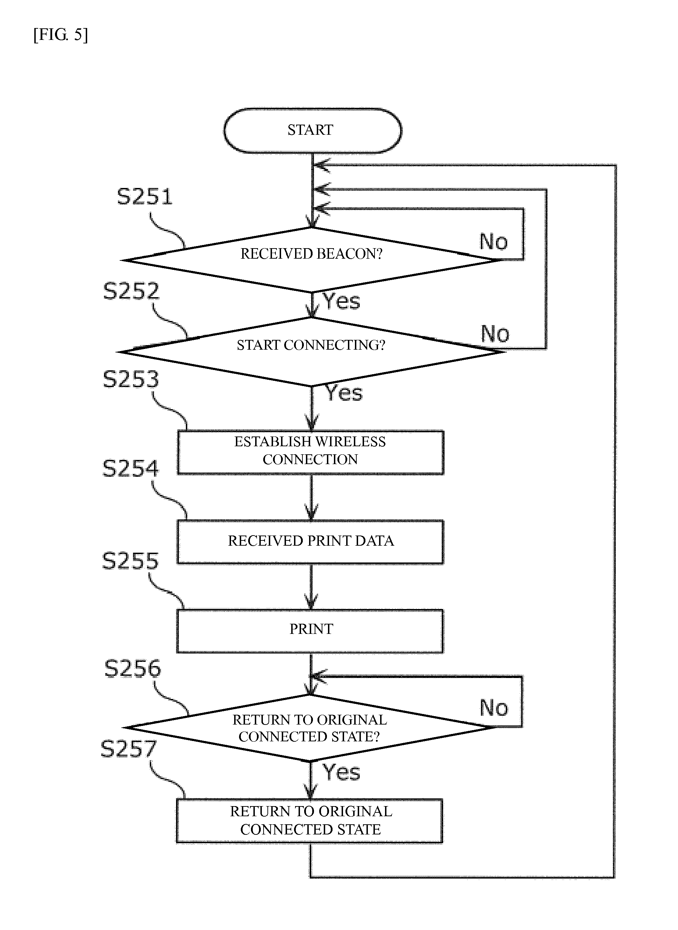

An operation of the printer 200 will be described in detail next. FIG. 5 is a flowchart illustrating a process operation of the printer 200 according to one or more embodiments.

First, it is determined whether a beacon has been received (S251). Here, when the beacon has been received (Yes in S251), the connecting part 221 may determine whether to start connection with the wireless base unit where the beacon is transmitted (S252). When it is determined to start the connection (Yes in S252), the connecting part 221 may establish the wireless connection with the printer 200 (S253). As a result, the wireless connected state of the printer 200 may be switched to the second connected state from the first connected state.

The connecting part 221, for example, may determine whether the SSID included in the beacon includes a predetermined character string, and start the connection with the wireless base unit (mobile terminal 100) where the beacon was transmitted when the SSID includes the predetermined character string. The predetermined character string may be the character string to identify the software application of the mobile terminal 100.

Further, the connecting part 221, for example, may determine whether or not a signal strength of the beacon is equal to or greater than a threshold strength, and start the wireless connection with the wireless base unit (mobile terminal 100) where the beacon was transmitted when the signal strength of the beacon is equal to or greater than the threshold strength.

Here, the connecting part 221 may save information in memory (not illustrated) for returning to the first connected state. For example, the connecting part 221 may save the connecting information of the access point 300 in memory.

When the beacon has not been received (No in S251) or when it is determined to not start the connection (No in S252), the process is returned to step S251.

Subsequently, the communication device 210 receives print data (S254). The printing device 230 may then carry out printing based on the print data (S255).

The determining part 222 may determine whether to return to the original connected state (the first connected state) (S256). The determining part 222, for example, may determine to return to the original connected state when the printing has completed. Further, when the wireless connection with the mobile terminal 100 is disconnected, the determining part 222, for example, may determine to return to the original connected state. Furthermore, for example, when an operation is started to put the printer 200 in a stopped state, the determining part 222 may determine to return to the original connected state.

Here, when it is determined to return to the original connected state (Yes in S256), the recovery part 223 may return to the original connected state (S257). In one or more embodiments of the present example, the recovery part 223 may disconnect the wireless connection with the mobile terminal 100 and return to the original connected state by resuming the wireless connection with the access point 300. The recovery part 223, for example, may return to the original connected state using the connection information of the access point 300 saved in the memory.

In the meantime, when it is determined not to return to the original connected state (No in S256), the process of step S256 may be repeated.

### [Effect]

As described above, the printer 200 according to one or more embodiments of the present example, when the notification signal is transmitted from the mobile terminal 100, can return the wireless connected state of the printer to the original connected state (first connected state) when it is determined that the printing has completed. Therefore, when the wireless connection for printing between the mobile terminal that is the wireless base unit and the printer 200 that is the wireless extension unit is no longer necessary, the wireless connection of the printer 200 can automatically return to the original connected state. That is, the wireless connected state of the printer 200 can be appropriately switched. For example, it can switch automatically from the second connected state where the printer 200 is wirelessly connected to the mobile terminal 100 to the first connected state where the printer is connected to the access point. In this case, because the time when the printer is not connected to the access point 300 can be reduced, the time that is impossible to print from another terminal (for example, a personal computer 400) connected to the printer via the access point 300 can be reduced. Further, there is no need for a user to manually operate to return to the original connected state after the printing is completed, and therefore, the convenience for the user can be improved.

Further, the printer 200 according to one or more embodiments of the present example can return the wireless connected state of the printer 200 to the first connected state when an operation is started to put the printer 200 in a stopped state. Therefore, when the printer 200 is returned to the operating state thereafter, there is no need for a user to manually switch the wireless connected destination from the mobile terminal 100 to another communication terminal, so the convenience for the user can be improved.

Furthermore, the printer 200 according to one or more embodiments of the present example can start a wireless connection with the mobile terminal 100 when it is determined that the SSID includes the predetermined character string. Therefore, it is possible to restrict the software application or the mobile terminal 100 that can access the printer 200, and unnecessary confusion such as unable to print can be suppressed.

Moreover, the printer 200 according to one or more embodiments of the present example can start a wireless connection with the mobile terminal 100 when it is determined that the strength of the notification signal is equal to or greater than the threshold strength. Therefore, it can suppress the mobile terminal 100 that is a considerable distance away from the printer 200 from wirelessly connecting to the printer 200, and also improve security of the printer 200.

Also, the mobile terminal 100 according to one or more embodiments of the present example can return the wireless connected state of the mobile terminal 100 to the original connected state (first connected state) when it is determined that the transmission of the print data is completed. Therefore, when the wireless connection for printing between the mobile terminal 100 that is the wireless base unit and the printer 200 that is the wireless extension unit is no longer necessary, the wireless connected state of the mobile terminal 100 can automatically return to the original connected state. In other words, the wireless connected state of the mobile terminal 100 can be appropriately switched. For example, it can switch automatically from the second connected state that is wirelessly connected to the printer 200 for printing to the first connected state that is connected to the access point 300 for internet communication. In this case, a time in which the mobile terminal 100 is not connected to the access point 300 can be reduced. Further, there is no need for a user to manually operate to return to the original connected state after the transmission of the print data is completed, and therefore, the convenience for the user can be improved.

Furthermore, the mobile terminal 100 according to one or more embodiments of the present example can return the wireless connected state of the mobile terminal 100 to the first connected state when an operation is started to put the mobile terminal 100 in a stopped state. Therefore, when the mobile terminal 100 is returned to the operating state thereafter, there is no need for a user to manually switch the wireless connected destination from the printer 200 to another communication terminal, so the convenience for the user can be improved.

### (Second Example)

Next, embodiments of the second example will be described. With the printing system according to one or more embodiments of the second example, a printer may function as the wireless base unit and a mobile terminal may function as the wireless extension unit. Further, when it is determined that a wireless connected state of the mobile terminal is to be returned to an original connected state, the wireless connected state of the mobile terminal may be automatically returned to the original state. For example, when it is determined that a transmission of print data has been completed in the mobile terminal, the mobile terminal may resume automatically the wireless connection with a communication terminal that was wirelessly connected before being wirelessly connected to the printer. A printing system according to such embodiments will be described in detail hereinafter with reference to drawings focusing on different points from the embodiments of the first example.

### [Configuration of Printing System]

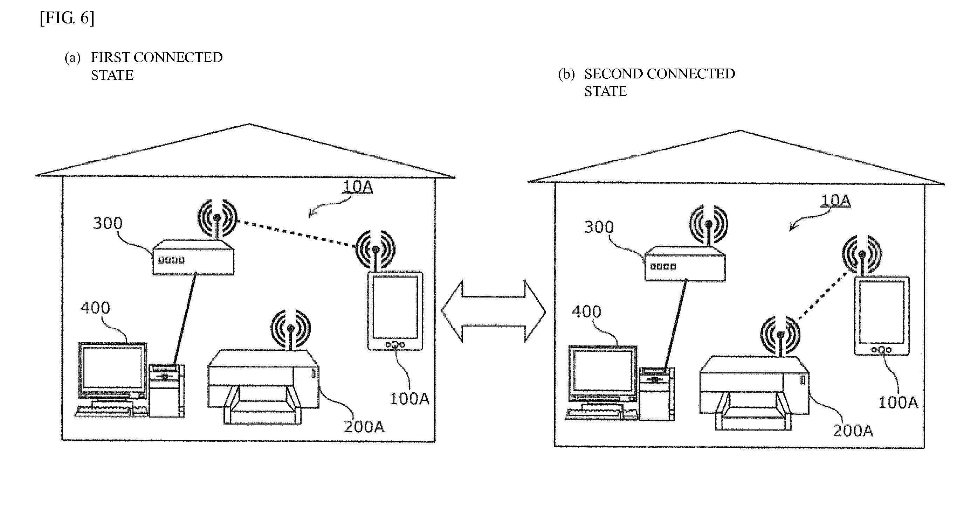

FIG. 6 is a diagram illustrating a configuration of a printing system 10A. In FIG. 6, the same reference numerals are applied to configuration elements that are similar to the embodiments of the first example and a detailed description thereof is omitted. The printing system 10A may comprise a mobile terminal 100A, a printer 200A, an access point 300, and a personal computer 400.

In the first connected state of FIG. 6(a), the mobile terminal 100A is wirelessly connected to the access point 300 as a wireless extension unit. Further, the printer 200A may broadcast a beacon as a wireless base unit. However, the printer 200A is not wirelessly connected to any communication terminals.

In FIG. 6(b) in the second connected state, the mobile terminal 100 and the printer 200 are mutually wirelessly connected. Here, the mobile terminal 100 is the wireless extension unit and the printer 200 is the wireless base unit.

### [Functional Configuration of Mobile Terminal and Printer]

A functional configuration of the mobile terminal 100A and the printer 200A will be described.

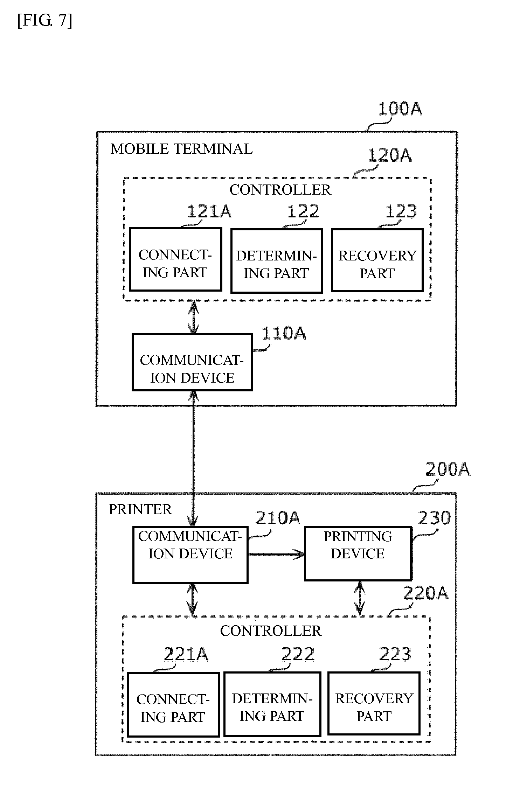

FIG. 7 is a block diagram illustrating a functional configuration of the mobile terminal 100A and the printer 200A according to one or more embodiments. In FIG. 7, the same reference numerals are applied to configuration elements that are similar to FIG. 2 in the embodiments of the first example, and a detailed description thereof is omitted.

First, a functional configuration of the mobile terminal 100A will be described. As illustrated in FIG. 7, the mobile terminal 100A may comprise a communication device 110A and a controller 120A.

The communication device 110A may receive and transmit a wireless signal. For example, the communication device 110A may receive a notification signal transmitted from the printer 200A. The communication device 110A may receive, for example, a beacon. Further, the communication device 110A, for example, may transmit print data to the printer 200A.

The controller 120A may comprise a connecting part 121A, a determining part 122, and a recovery part 123.

The connecting part 121A, in the first connected state which is wirelessly connected to the access point 300, may switch from the first connected state to the second connected state that is a state to be wirelessly connected to the printer 200 by starting a wireless connection with the printer 200A.

A functional configuration of the printer 200A will be described next. As illustrated in FIG. 2, the printer 200A may comprise a communication device 210A, a controller 220A, and a printing device 230.

The communication device 210A may receive and transmit a wireless signal. For example, the communication device 210A may broadcast a notification signal including connection information to be wirelessly connected. Further, the communication device 210A, for example, may receive print data from the mobile terminal 100A.

The controller 220A may comprise a connecting part 221A, a determining part 222, and a recovery part 223.

The connecting part 221A may switch the first connected state to the second connected state by starting a wireless connection with the mobile terminal 100 in the first connected state that is wirelessly connected to the access point 300. The connecting part 221A may carry out a wireless connection with the mobile terminal 100A in the infrastructure mode.

### [Operation of Printing System]

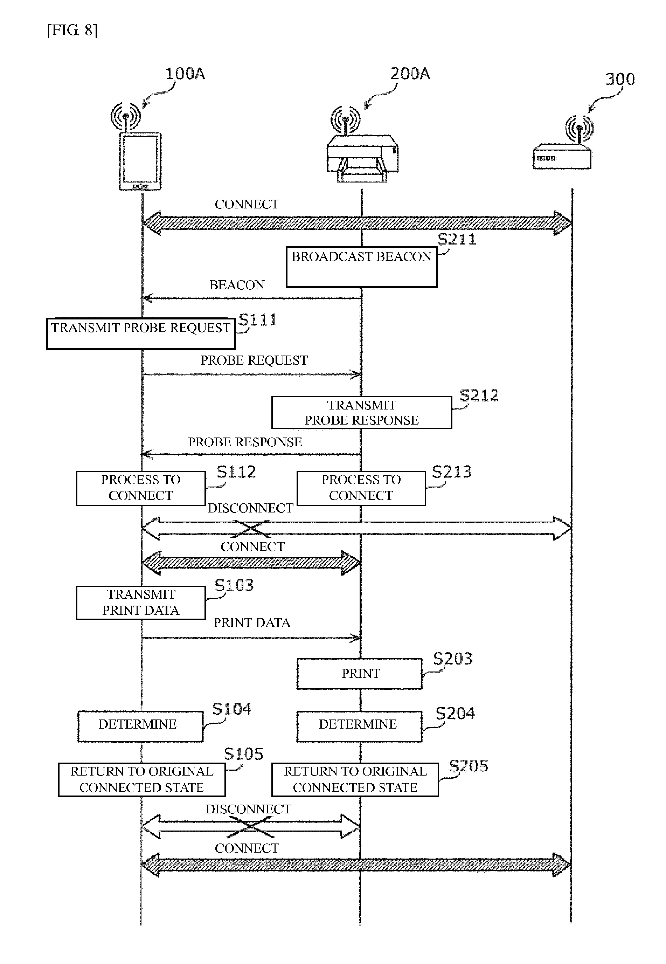

Next, an operation of the printing system 10A configured as described above will be described. FIG. 8 is a sequence diagram illustrating a flow of data and message between the mobile terminal 100A and the printer 200A. A description will be given here with the first connection state as an initial state where the mobile terminal 100A is wirelessly connected to the access point 300. In FIG. 8, the same reference numerals are applied to steps that are similar to FIG. 3 in the embodiments of the first example, and a detailed description thereof is omitted.

First, the communication device 210A of the printer 200A may broadcast a beacon (S211). For example, the communication device 210A may transmit a beacon in a predetermined cycle (e.g., 100 milliseconds).

A user starts a software application to print in the mobile terminal 100A. The user then selects a print object in the software application and instructs printing of the print object.

At that time, the communication device 110A of the mobile terminal 100A may broadcast (S111) a connection request signal. The connection request signal is a wireless signal to request a wireless connection to the wireless base unit. A probe request is an example of the connection request signal.

Next, the communication device 210A of the printer 200A may receive the connection request signal and transmit a connection response signal that responds to the connection request signal to the mobile terminal 100A (S212). A probe response is an example of the connection response signal.

The connection processes (S 112 and S213) are carried out after transmitting and receiving the connection request signal and connection response signal as described above. As a result, the first connected state may be switched to the second connected state. Here, the printer 200A is the wireless base unit and the mobile terminal 100A is the wireless extension unit.

Thereafter, the process steps S103 to S105 and steps S203 to S205 are carried out, and the wireless connected state of the mobile terminal 100A and the printer 200A may be returned to the first connected state.

### [Operation of Mobile Terminal]

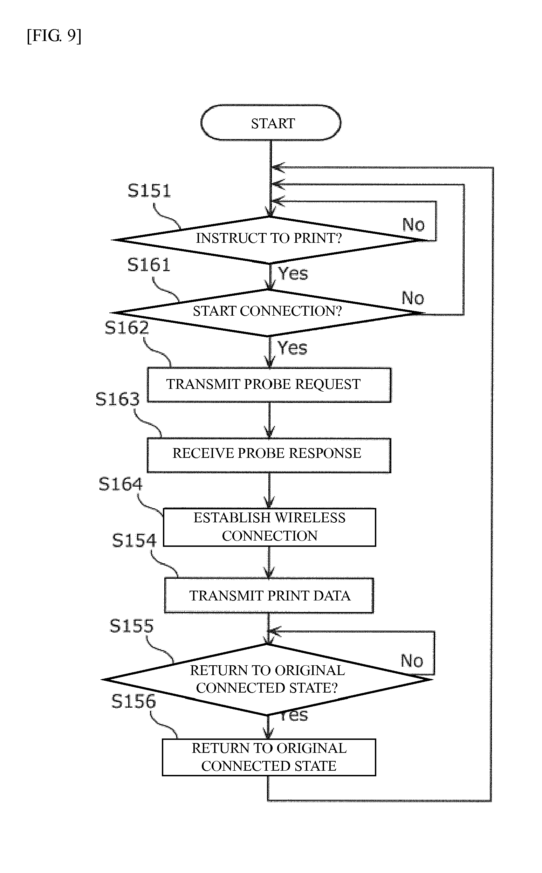

An operation of the mobile terminal 100A will be described next. FIG. 9 is a flowchart illustrating a process operation of the mobile terminal 100A according to one or more embodiments. In FIG. 9, the communication device 110A is assumed to receive a beacon periodically sent from the printer 200A that is the wireless base unit. Further, in Fig. 9, the same reference numerals are applied to steps that are similar to FIG. 4 in the embodiments of the first example, and a detailed description thereof is omitted.

First, the controller 120A may determine whether a print instruction has been received from a user (S151). When the print instruction has not been received here (No in S151), the process returns to step S 151.

When the print instruction has been received (Yes in S151), the connecting part 121A may determine whether to start connection with the wireless base unit where the beacon is transmitted (S161). For example, the connecting part 121A may determine whether the beacon satisfies a prescribed condition, and determine according to the determination result whether to start connection with the wireless base unit (printer 200A in this case) where the beacon was transmitted.

The connecting part 121A, for example, may determine whether the SSID included in the beacon includes a predetermined character string, and may determine to start connection with the wireless base unit when the SSID includes the predetermined character string. The predetermined character string may be the character string to identify the printer that corresponds to the software application. Further, the connecting part 121A, for example, may determine whether or not a signal strength of the beacon is equal to or greater than a threshold strength, and may determine to start a wireless connection with the wireless base unit when the signal strength of the beacon is equal to or greater than the threshold strength.

Here, when it is determined to not start a connection (No in S161), the process of step S151 may be repeated. In the meantime, when it is determined to start a connection with the wireless base unit (Yes in S161), the communication device 110A may broadcast a probe request including SSID included in the beacon (S162).

The communication device 110A may receive a probe response from the printer 200A that is the wireless base unit (S163). The connecting part 121A may establish a wireless connection with the printer 200A (S164). The wireless connected state of the mobile terminal 100A may switch here from the first connected state to the second connected state.

Subsequently, the mobile terminal 100A may carry out the processes of steps S 154 to 156.

### [Operation of Printer]

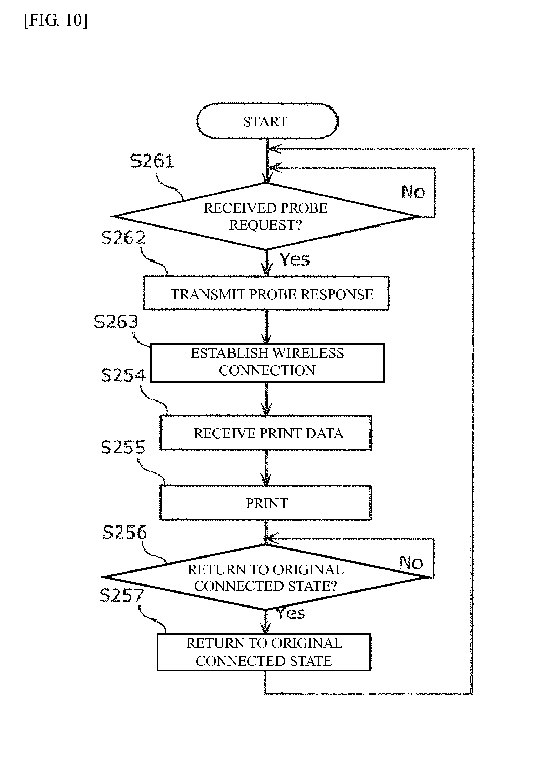

An operation of the printer 200A will be described in detail next. FIG. 10 is a flowchart illustrating a process operation of the printer 200A. In FIG. 10, the communication device 210A is assumed to be transmitting a beacon periodically. Further, in Fig. 10, the same reference numerals are applied to steps that are similar to FIG. 5 in the embodiments of the first example, and a detailed description thereof is omitted.

First, the controller 220A may determine whether a probe request including SSID of the individual device (printer 200A) has been received (S261). When the probe request has not been received here (No in S261), the process may repeat step S261.

On the other hand, when the probe request has been received (Yes in S261), the communication device 210A may transmit a probe response (S262). Further, the connecting part 221A may establish a wireless connection with the mobile terminal 100A (S263). The wireless connected state of the printer 200A may switch from the first connected state to the second connected state here.

Subsequently, the printer 200A may carry out the processes of steps S254 to 257.

### [Effect]

As described above, the mobile terminal 100A according to one or more embodiments of the present example, when a notification signal is transmitted from the printer 200A, can return the wireless connected state of the mobile terminal 100A to the original connected state (first connected state) when it is determined that the transmission of print data has been completed. That is, when the printer 200A is the wireless base unit and the mobile terminal 100A is the wireless extension unit, the wireless connected state of the mobile terminal 100A can be appropriately switched.

Further, the printer 200A according to one or more embodiments of the present example can appropriately switch the wireless connected state of the mobile terminal 100A and the printer 200A even when connecting wirelessly with the mobile terminal 100A in an infrastructure mode. The infrastructure mode is not limited to the connection of one-to-one as in an ad hoc mode, and therefore, the printer 200A can be wirelessly connected to a plurality of mobile terminals simultaneously. Accordingly, the availability of the printer 200A can be improved. The infrastructure mode is also a common wireless connection system, and a printer and mobile terminal can be developed at a lower cost than the ad hoc mode.

Furthermore, the printer 200A according to one or more embodiments of the present example can return the wireless connected state of the printer 200A to the original connected state (first connected state) when it is determined that the printing is completed. Therefore, the printer 200A can promptly open resources occupied for the mobile terminal 100A (e.g., limiting a number of simultaneous connections, IP address, and the like), and the printer 200A can be used effectively.

### (Third Example)

Next, a printing system according to one or more embodiments of the third example will be described. The printing system according to the embodiments of the third example where a plurality of printers is provided differs from the embodiments of the second example. That is, in the third example, each of the plurality of printers may function as a wireless base unit and a mobile terminal may function as the wireless extension unit in the embodiments. A printing system according to such embodiments will be described in detail hereinafter with reference to drawings focusing on different points from the embodiments of the first and second examples.

### [Configuration of Printing System]

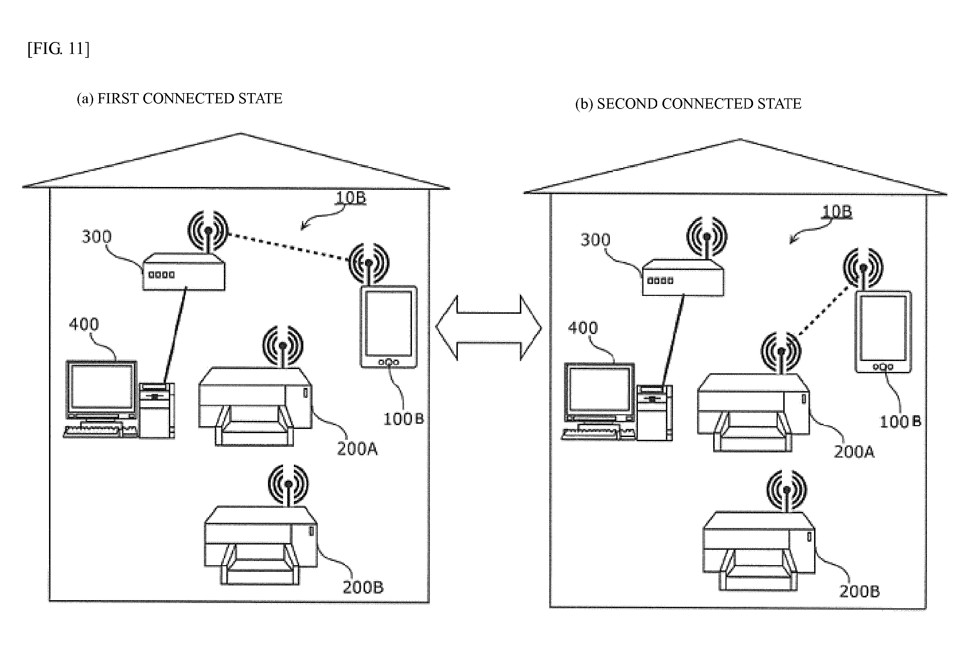

FIG. 11 is a diagram illustrating a configuration of a printing system 10B according to one or more embodiments. In FIG. 11, the same reference numerals are applied to configuration elements that are similar to the embodiments of the second example and a detailed description thereof is omitted. The printing system 10B may comprise a mobile terminal 100B, a printer 200A, a printer 200B, an access point 300, and a personal computer 400.

### [Functional Configuration of Mobile Terminal and Printer]

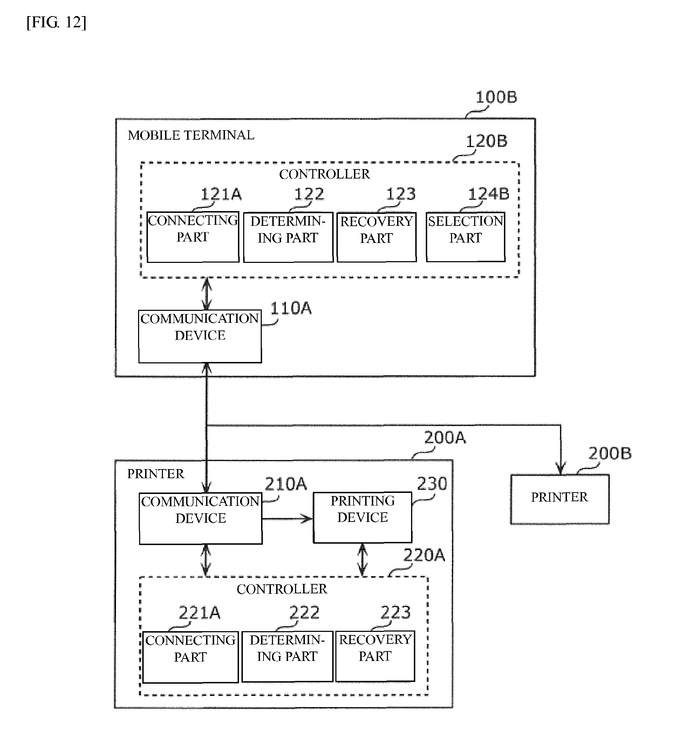

A functional configuration of the mobile terminal and the printer will be described. FIG. 12 is a block diagram illustrating a functional configuration of the mobile terminal 100B, the printers 200A and 200B. In FIG. 7, the same reference numerals are applied to configuration elements that are similar to FIG. 2 in the embodiments of the first example, and a detailed description thereof is omitted. Further, the functional configuration of the printer 200B is the same as the printer 200A, and therefore an illustration of the internal configuration is omitted.

The mobile terminal 100B may comprise a communication device 110A and a controller 120B. Further, the controller 120B may comprise a connecting part 121A, a determining part 122, a recovery part 123, and additionally a selection part 124B.

The selection part 124B may select a printer to transmit pint data from a plurality of printers. For example, the selection part 124B may select a printer instructed by a user.

### [Operation of Printing System]

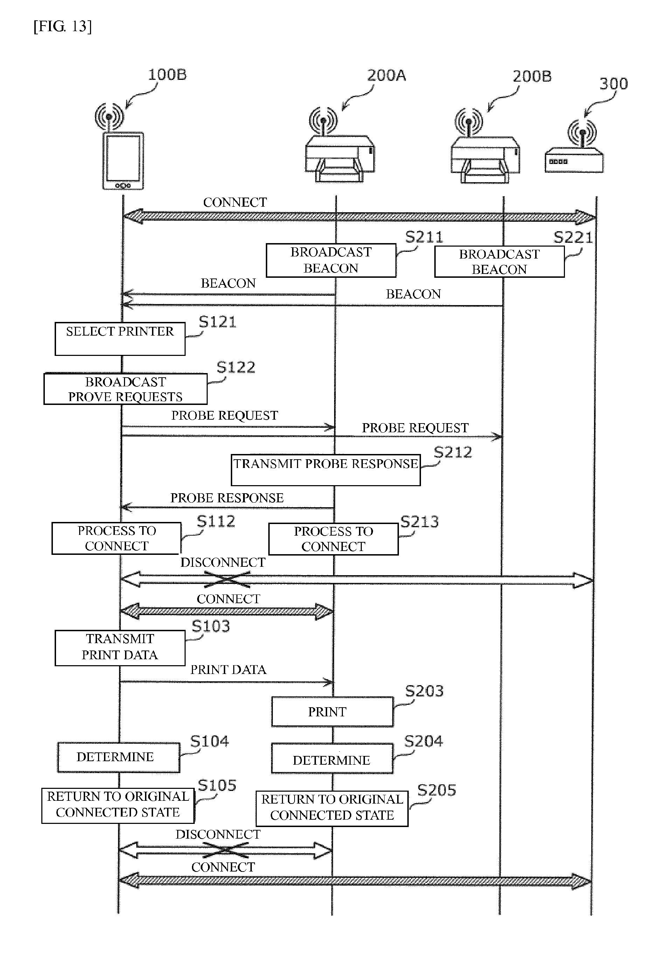

An operation of the printing system 10B configured as described above will be described below. FIG. 13 is a sequence diagram illustrating a flow of data and message between the mobile terminal 100B and the printers 200A and 200B. In FIG. 13, the same reference numerals are applied to steps that are similar to FIG. 8 in the embodiments of the second example, and a detailed description thereof is omitted.

First, the printer 200B may broadcast a beacon (S221) as is the case in the printer 200A.

A user starts a software application to print in the mobile terminal 100A. The user then selects a print object in the software application and instructs to print of the print object.

At that time, the selection part 124B of the mobile terminal 100B may select a printer to start a wireless connection from the plurality of printers (S121). Here, it is assumed that the printer 200A is selected.

For example, the selection part 124B may display information to select a printer based on the connection information included in the beacon. Further, the selection part 124B may accept the selection by the user for information displayed on a screen. Further, the selection part 124B, for example, may select a printer that has transmitted the beacon with the strongest signal strength.

Subsequently, the connection unit 110A of the mobile terminal 100B may broadcast a connection request signal including SSID of the selected printer (S122). Next, the communication device 210A of the printer 200A may receive the connection request signal and transmit a connection response signal that responds to the connection request signal to the mobile terminal 100B (S212).

Meanwhile, the printer 200B may receive the connection request signal; however, it may not transmit a connection response signal that responds to the connection request signal to the mobile terminal 100B. This is because the SSID is not included in the individual device (printer 200B) in the connection request signal.

The connection process similar to the embodiments of the second example may be carried out after transmitting and receiving the connection request signal and connection response signal as described above.

### [Operation of Mobile Terminal]

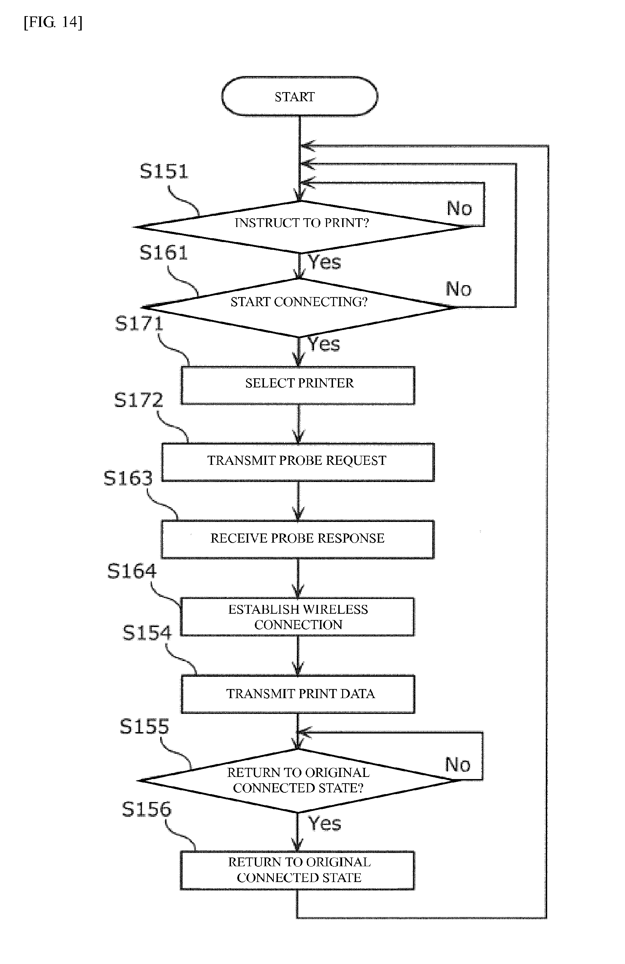

An operation of the mobile terminal 100B will be described in detail next. FIG. 14 is a flowchart illustrating a process operation of the mobile terminal 100B. In Fig. 14, the same reference numerals are applied to steps that are similar to FIG. 9 in the embodiments of the second example, and a detailed description thereof is omitted.

After the processes of steps S151 and S161, the selection part 124B may select one printer from a plurality of printers (S171). Subsequently, the selection part 124B may broadcast a connection request signal including the SSID of the selected printer to the communication device 110A (S122).

The mobile terminal 100B may then execute the processes of step S163, S164, and S154 to S156.

### [Effect]

As described above, the mobile terminal 100B according to one or more embodiments of the present example can select an appropriate printer when notification signals of a plurality of printers are received.

### (Other Examples)

Descriptions were given above for the printing systems according to embodiments; however, the present invention is not limited to those embodiments.

For example, in the above embodiments, a determination is made whether to be connected wirelessly by using the SSID; however, other information may be used. Instead of the SSID, for example, a physical address (e.g., media access control (MAC) address) may be used. In this case, connection information included in a notification signal may include a physical address of a wireless base unit. Further, for example, in one or more embodiments of the first example, the connecting part 221 of the printer 200 may determine whether a physical address included in the connection information includes a prescribed number and starts a wireless connection with the mobile terminal 100 when the physical address includes the prescribed number.

In one or more embodiments described above, the printing system may comprise the access point and personal computer; however, it may not include these. The printing system may comprise at least a mobile terminal and a printer.

Further, when notification signals from a plurality of wireless base units are received in the embodiments, a wireless extension unit may be wirelessly connected with the wireless base unit that transmitted the strongest notification signal.

In the embodiments described above, the printer may comprise a user interface (e.g., pushbutton) for accepting permission for a wireless connection from a user. In this case, the printer may start the wireless connection with the mobile terminal only when the wireless connection is permitted via the user interface by the user. Furthermore, the user interface may change a mode of the user interface when requesting permission for a wireless connection to the user. For example, when the user interface is a pushbutton, the pushbutton may be illuminated. Accordingly, this allows improvement of the convenience for the user.

Further, a user interface for forcefully returning to an original connected state may be provided to the printer and mobile terminal in the embodiments described above. In this case, regardless of the determination result by the printer and the mobile terminal in the embodiments above, it may be forcefully returned to the original connected state.

Furthermore, in the embodiments above, when returning to the original connected state, information may be displayed on a screen or the like of the printer or mobile terminal for the user to confirm. In this case, the connected state of the printer and mobile terminal is returned to the original connected state when the user gives an approval to return to the original connected state. The user may select in the mobile terminal whether or not to display the information or display the information on a screen of either the printer or the mobile terminal.

It can be applied as a printer having a wireless communication function.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Description of the Numerical References]

- 10, 10A, 10B: printing system
- 100, 100A, 100B: mobile terminal
- 110, 110A, 210, 210A: communication device
- 120, 120A, 120B, 220, 220A: controller
- 121, 121A, 221, 221A: connecting part
- 122, 222: determining part
- 123, 223: recovery part
- 124B: selection part
- 200, 200A, 200B: printer
- 230: printing device

## Claims

1. A printer having a wireless communication function, comprising:
a communication device (210, 210A) that wirelessly receives a notification signal broadcast by a mobile terminal (100, 100A, 100B) and including connection information for wirelessly connecting to the mobile terminal;
a controller (220, 220A) that switches a connection state of the printer (200, 200A, 200B) from a first connected state to a second connected state by starting a wireless connection with the mobile terminal (100, 100A, 100B) according to the connection information included in the notification signal, wherein
in the first connected state, the printer (200, 200A, 200B) is wirelessly connected to a communication terminal different from the mobile terminal (100, 100A, 100B) or is not wirelessly connected to either the communication terminal or the mobile terminal, and
in the second connected state, the printer (200, 200A, 200B) is wirelessly connected to the mobile terminal (100, 100A, 100B); and
a printing device (230) that prints in the second connected state based on print data received from the mobile terminal (100, 100A, 100B),
wherein the controller (220, 220A) determines whether the printing has been completed, and switches the connection state of the printer (200, 200A, 200B) to the first connected state on determining that the printing has been completed.

2. The printer according to claim 1, wherein, when an operation is started to put the printer (200, 200A, 200B) in a stopped state, the controller (220, 220A) switches the connection state of the printer to the first connected state.

3. The printer according to claim 1 or 2, wherein
the connection information includes a service set identifier, or SSID, and
the controller (220, 220A) determines whether the SSID includes a predetermined character string, and starts a wireless connection with the mobile terminal on determining that the SSID includes the predetermined character string.

4. The printer according to claim 1 or 2, wherein
the connection information includes a physical address of the mobile terminal (100, 100A, 100B), and
the controller (220, 220A) determines whether the physical address includes a predetermined number, and starts a wireless connection with the mobile terminal on determining that the physical address includes the predetermined number.

5. The printer according to any one of claims 1 to 4, wherein the controller (220, 220A) determines whether a strength of the notification signal is equal to or greater than a threshold strength, and starts a wireless connection with the mobile terminal (100, 100A, 100B) on determining that the strength of the notification signal is equal to or greater than the threshold strength.

6. A printing system for wirelessly communicating print data, comprising:
a mobile terminal (100, 100A, 100B); and
a printer (200, 200A, 200B) having a wireless communication function, wherein
the mobile terminal (100, 100A, 100B) comprises:
a controller (120, 120A, 120B) that switches a connection state of the mobile terminal (100, 100A, 100B) from a first connected state to a second connected state by starting a wireless connection with the printer (200, 200A, 200B), wherein
in the first connected state, the mobile terminal (100, 100A, 100B) is wirelessly connected to a communication terminal different from the printer (200, 200A, 200B) or is not wirelessly connected to either the communication terminal or the printer, and
in the second connected state, the mobile terminal (100, 100A, 100B) is wirelessly connected to the printer (200, 200A, 200B); and
a communication device (110, 110A) that transmits print data to the printer in the second connected state, wherein
the controller (120, 120A, 120B) determines whether transmission of the print data has been completed, and switches the connection state of the mobile terminal (100, 100A, 100B) to the first connected state on determining that the transmission of the print data has been completed.

7. The printing system according to claim 6, wherein, when an operation is started to put the mobile terminal (100, 100A, 100B) in a stopped state, the controller (120, 120A, 120B) switches the connection state of the mobile terminal to the first connected state.

8. The printing system according to claim 6 or 7, wherein
the printer (200, 200A, 200B) broadcasts a notification signal including connection information for a wireless connection with the printer,
the communication device (110, 110A) of the mobile terminal (100, 100A, 100B) receives the notification signal and transmits a connection request signal to the printer using the connection information,
the printer (200, 200A, 200B), when the connection request signal is received, transmits a connection response signal that responds to the connection request signal to the mobile terminal (100, 100A, 100B), and
when the connection response signal is received, the controller (120, 120A, 120B) starts a wireless connection with the printer.

9. A method performed in a printer having a wireless communication function, comprising:
wirelessly receiving a notification signal that is broadcast by a mobile terminal (100, 100A, 100B) and includes connection information for wirelessly connecting to the mobile terminal;
switching a connection state of the printer (200, 200A, 200B) from a first connected state to a second connected state by starting a wireless connection with the mobile terminal (100, 100A, 100B) according to the connection information included in the notification signal, wherein
in the first connected state, the printer (200, 200A, 200B) is wirelessly connected to a communication terminal different from the mobile terminal (100, 100A, 100B) or is not wirelessly connected to any of the communication terminal or the mobile terminal, and
in the second connected state, the printer (200, 200A, 200B) is wirelessly connected to the mobile terminal 100, 100A, 100B);
printing in the second connected state based on print data received from the mobile terminal (100, 100A, 100B);
determining whether the printing has been completed; and
switching the connection state of the printer (200, 200A, 200B) to the first connected state when the determining determines that the printing has been completed.

10. The method according to claim 9, further comprising, when an operation is started to put the printer (200, 200A, 200B) in a stopped state, switching the connection state of the printer to the first connected state.

11. The method according to claim 9 or 10, wherein
the connection information includes a service set identifier (SSID), and
the method further comprises:
determining whether the SSID includes a predetermined character string; and
starting a wireless connection with the mobile terminal (100, 100A, 100B) when it is determined that the SSID includes the predetermined character string.

12. The method according to claim 9 or 10, wherein
the connection information includes a physical address of the mobile terminal (100, 100A, 100B), and
the method further comprises:
determining whether the physical address includes a predetermined number; and
starting a wireless connection with the mobile terminal (100, 100A, 100B) when the determining determines that the physical address includes the predetermined number.

13. The method according to any one of claims 9 to 12, further comprising:
determining whether a strength of the notification signal is equal to or greater than a threshold strength; and
starting a wireless connection with the mobile terminal (100, 100A, 100B) when the determining determines that the strength of the notification signal is equal to or greater than the threshold strength.

14. A method performed in a printing system comprising a mobile terminal and a printer having a wireless communication function for wirelessly communicating print data, the method comprising:
switching a connection state of the mobile terminal (100, 100A, 100B) from a first connected state to a second connected state by starting a wireless connection with the printer (200, 200A, 200B), wherein
in the first connected state, the mobile terminal (100, 100A, 100B) is wirelessly connected to a communication terminal different from the printer (200, 200A, 200B) or is not wirelessly connected to either the communication terminal or the printer, and
in the second connected state, the mobile terminal (100, 100A, 100B) is wirelessly connected to the printer (200, 200A, 200B);
transmitting print data to the printer (200, 200A, 200B) in the second connected state;
determining whether transmission of the print data has been completed; and
switching the connection state of the mobile terminal (100, 100A, 100B) to the first connected state when the determining determines that the transmission of the print data has been completed.

15. The method according to claim 14, further comprising:
broadcasting a notification signal including connection information for a wireless connection with the printer (200, 200A, 200B);
receiving the notification signal and transmitting a connection request signal to the printer (200, 200A, 200B) using the connection information;
when the connection request signal is received, transmitting a connection response signal that responds to the connection request signal to the mobile terminal (100, 100A, 100B);
when the connection response signal is received, starting a wireless connection with the printer (200, 200A, 200B); and
when an operation is started to put the mobile terminal (100, 100A, 100B) in a stopped state, the connection state of the mobile terminal may be switched to the first connected state.
